(19) Europäisches Patentamt
European Patent Office
Office européen des brevets

(11) **EP 3 968 271 A1**

(12) **EUROPÄISCHE PATENTANMELDUNG**

(43) Veröffentlichungstag:
**16.03.2022 Patentblatt 2022/11**

(21) Anmeldenummer: **20195786.7**

(22) Anmeldetag: **11.09.2020**

(51) Internationale Patentklassifikation (IPC):
**G06T 7/00** *(2017.01)* **A61B 6/03** *(2006.01)*
**G06T 7/136** *(2017.01)*

(52) Gemeinsame Patentklassifikation (CPC):
**G06T 7/0012; G06T 7/136;** G06T 2207/10081;
G06T 2207/20041; G06T 2207/30061;
G06T 2207/30101; G06T 2207/30172

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Bayer AG
51373 Leverkusen (DE)**

(72) Erfinder:
• LIAO, Wei
  **60438 Frankfurt am Main (DE)**
• FOIS, Franco
  **40789 Monheim (DE)**
• RECHSTEINER, Daniel
  **51107 Köln (DE)**

(74) Vertreter: **BIP Patents
c/o Bayer Intellectual Property GmbH
Alfred-Nobel-Straße 10
40789 Monheim am Rhein (DE)**

(54) **ANALYSE INTRAPULMONALER VERZWEIGUNGEN**

(57) Die vorliegende Erfindung befasst sich mit der Analyse der intrapulmonalen Verzweigungen der Lungengefäße eines Patienten. Gegenstände der vorliegenden Erfindung sind ein computerimplementiertes Verfahren, ein Computersystem und ein Computerprogrammprodukt zum Erstellen eines dreidimensionalen Modells der intrapulmonalen Verzweigungen der Lungengefäße auf Basis von radiologischen Aufnahmen.

EP 3 968 271 A1

**Beschreibung**

Die vorliegende Erfindung befasst sich mit der Analyse der intrapulmonalen Verzweigungen der Lungengefäße eines Patienten. Gegenstände der vorliegenden Erfindung sind ein computer-implementiertes Verfahren, ein Computersystem und ein Computerprogrammprodukt zum Erstellen eines dreidimensionalen Modells der intrapulmonalen Verzweigungen der Lungengefäße auf Basis von radiologischen Aufnahmen.

Als Lungengefäße bezeichnet man die Pulmonalarterie (*Arteria pulmonalis*) und die beiden Lungenvenen (*Venae pulmonalis*) mit ihren intrapulmonalen Verzweigungen. Die intrapulmonalen Verzweigungen werden in dieser Beschreibung auch als Lungengefäßbaum (engl.: *pulmonary vessel tree*) bezeichnet.

Bei einigen Krankheiten kommt es zu Veränderungen der Lungengefäße, die mit radiologischen Verfahren sichtbar gemacht werden können.

Die pulmonale Hypertonie, auch als Lungenhochdruck bekannt, ist beispielsweise eine Erkrankung des Blutkreislaufes der Lunge, dem so genannten kleinen Kreislauf. Kommt es nun zu einer Störung im Lungenkreislauf, z.B. durch Verringerung der Durchmesser oder der Elastizität der Blutgefäße, erhöht sich der Druck im kleinen Kreislauf und das Blut staut sich in die rechte Herzhälfte und dann über den großen Kreislauf in den restlichen Körper zurück. Gleichzeitig gelangt zu wenig sauerstoffreiches Blut in den großen Kreislauf.

Bei einer Form der pulmonalen Hypertonie, der pulmonalen arteriellen Hypertonie (PAH), werden die Blutgefäße in der Lunge verengt, blockiert oder zerstört. Bei 90% der PAH-Patienten zeigt das Röntgenbild Anomalien; diese umfassen erweiterte zentrale Lungengefäße und eine Gefäßrarefizierung (Verarmung an Lungengefäßen in Anzahl und Kaliber) der peripheren Blutgefäße.

Um Veränderungen der Lungengefäße quantifizieren zu können, wäre es vorteilhaft, ein dreidimensionales Modell der Lungengefäße, insbesondere des Lungengefäßbaums eines Patienten zur Verfügung zu haben.

Ein solches Modell wird durch die vorliegende Erfindung bereitgestellt.

Ein erster Gegenstand der vorliegenden Erfindung ist ein computer-implementiertes Verfahren umfassend die Schritte:

- Bereitstellen oder Empfangen eines Binärbildes eines Lungengefäßbaums eines Patienten, wobei Bildelemente des Binärbildes, die einen Teil eines Lungengefäßes repräsentieren, einen ersten Tonwert aufweisen,

- Erzeugen eines regularisierten Binärbildes durch Regularisierung des Binärbildes,

- Festlegen eines Start-Bildelements,

- für jedes Bildelement des regularisierten Binärbildes, das den ersten Tonwert aufweist: Berechnen einer geodätischen Distanz zwischen dem Bildelement und dem Start-Bildelement,

- Ermitteln von Bildelementen, bei denen die geodätische Distanz ein lokales Maximum durchläuft, wobei die ermittelten Bildelemente mit einem lokalen Maximum Endpunkte der Lungengefäße repräsentieren,

- Bilden von Trajektorien von den Endpunkten der Lungengefäße zum Start-Bildelement,

- Ausgeben der Trajektorien auf einem Monitor und/oder einem Drucker und/oder Speichern der Trajektorien in einem Datenspeicher.

Ein weiterer Gegenstand der vorliegenden Erfindung ist ein Computersystem umfassend

- eine Eingabeeinheit,
- eine Steuer- und Recheneinheit und
- eine Ausgabeeinheit

wobei die Steuer- und Recheneinheit konfiguriert ist, die Eingabeeinheit zu veranlassen, ein Binärbild eines Lungengefäßbaums eines Patienten zu empfangen, wobei Bildelemente des Binärbildes, die einen Teil eines Lungengefäßes repräsentieren, einen ersten Tonwert aufweisen,
wobei die Steuer- und Recheneinheit konfiguriert ist, ein regularisierte Binärbildes durch Regularisierung des Binärbildes zu erzeugen,
wobei die Steuer- und Recheneinheit konfiguriert ist, ein Start-Bildelement festzulegen,
wobei die Steuer- und Recheneinheit konfiguriert ist, für jedes Bildelement des regularisierten Binärbildes, das den ersten Tonwert aufweist, eine geodätische Distanz zwischen dem Bildelement und dem Start-Bildelement zu berechnen,
wobei die Steuer- und Recheneinheit konfiguriert ist, Bildelemente zu ermitteln, bei denen die geodätische Distanz ein lokales Maximum durchläuft, wobei die ermittelten Bildelemente Endpunkte der Lungengefäße repräsentieren,
wobei die Steuer- und Recheneinheit konfiguriert ist, Trajektorien von den Endpunkten der Lungengefäße zum Start-Bildelement zu bilden,
wobei die Steuer- und Recheneinheit konfiguriert ist, die Ausgabeeinheit zu veranlassen, die Trajektorien auf einem Monitor und/oder Drucker auszugeben und/oder in einem Datenspeicher zu speichern.

Ein weiterer Gegenstand der vorliegenden Erfindung ist ein Computerprogrammprodukt umfassend ein Computerprogramm, das in einen Arbeitsspeicher eines Computersystems geladen werden kann und dort das Computersystem dazu veranlasst, folgende Schritte ausführen:

- Empfangen eines Binärbildes eines Lungengefäßbaums eines Patienten, wobei Bildelemente des Binärbildes, die einen Teil eines Lungengefäßes repräsentieren, einen ersten Tonwert aufweisen,

- Erzeugen eines regularisierten Binärbildes durch Regularisierung des Binärbildes,

- Festlegen eines Start-Bildelements,

- für jedes Bildelement des regularisierten Binärbildes, das den ersten Tonwert aufweist: Berechnen einer geodätischen Distanz zwischen dem Bildelement und dem Start-Bildelement,

- Ermitteln von Bildelementen, bei denen die geodätische Distanz ein lokales Maximum durchläuft, wobei die ermittelten Bildelemente Endpunkte der Lungengefäße repräsentieren,

- Bilden von Trajektorien von den Endpunkten der Lungengefäße zum Start-Bildelement,

- Ausgeben der Trajektorien auf einem Monitor und/oder einem Drucker und/oder Speichern der Trajektorien in einem Datenspeicher.

Die Erfindung wird nachstehend näher erläutert, ohne zwischen den Erfindungsgegenständen (Verfahren, Computersystem, Computerprogrammprodukt) zu unterscheiden. Die nachfolgenden Erläuterungen sollen vielmehr für alle Erfindungsgegenstände in analoger Weise gelten, unabhängig davon, in welchem Kontext (Verfahren, Computersystem, Computerprogrammprodukt) sie erfolgen.

Sind in der vorliegenden Beschreibung Schritte in einer bestimmten Reihenfolge aufgeführt, so bedeutet dies nicht zwangsläufig, dass die Schritte auch in der angegebenen Reihenfolge ausgeführt werden müssen. Die Erfindung soll vielmehr so verstanden werden, dass die in einer bestimmten Reihenfolge aufgeführten Schritte in einer beliebigen Reihenfolge oder auch parallel zueinander ausgeführt werden können, es sei denn, ein Schritt basiert auf einem anderen Schritt, was aus der Beschreibung der Schritte jeweils deutlich wird. Die konkret in diesem Dokument aufgeführten Reihenfolgen stellen demnach nur bevorzugte Ausführungsformen der Erfindung dar.

Die vorliegende Erfindung dient der Erstellung eines dreidimensionalen Modells der intrapulmonalen Verzweigungen der Lungengefäße eines Patienten.

Bei dem Patienten handelt es sich vorzugsweise um ein Säugetier, am meisten bevorzugt um einen Menschen.

Der Patient kann an einer Lungenerkrankung leiden, die sich durch eine oder mehrere Veränderungen der Lungengefäße gegenüber einem gesunden Patienten auszeichnet. Beispiele für solche Lungenerkrankungen sind pulmonale Hypertonie, pulmonale arterielle Hypertonie, chronische thromboembolische pulmonale Hypertonie.

Unter einem Modell der intrapulmonalen Verzweigungen der Lungengefäße wird eine Repräsentation des Lungengefäßbaums verstanden, in der Lungengefäße von umgebendem Gewebe differenziert werden können. Vorzugsweise handelt es sich um eine digitale Repräsentation. Der Begriff "digital" bedeutet, dass das Modell von einer Maschine, in der Regel einem Computersystem, verarbeitet werden kann. Unter "Verarbeitung" werden die bekannten Verfahren zur elektronischen Datenverarbeitung (EDV) verstanden. Vorzugsweise kann das Modell auf einem Bildschirm (Monitor) eines Computersystems angezeigt werden. Vorzugsweise liegt das Modell in Form einer dreidimensionalen Grafik vor, z.B. in Form einer Rastergrafik umfassend eine Vielzahl an Voxeln, wobei ein Tonwert eines jeden Voxels spezifiziert, ob das Voxel ein Lungengefäß repräsentiert oder ob das Voxel umgebendes Gewebe repräsentiert. Unter "dreidimensional" wird verstanden, dass die räumlichen Ausdehnungen der Lungengefäße (z.B. Längen, Verzweigungen, Verengungen) und/oder die räumlichen Beziehungen zwischen einzelnen Lungengefäße (z.B. Abstände) aus dem Modell abgeleitet und/oder in dem Modell sichtbar gemacht werden können.

Das Modell wird auf Basis einer oder mehrerer radiologischer Aufnahmen erzeugt.

Beispiele für radiologische Aufnahmen sind Röntgenbilder, CT-Scans (CT = Computertomografie), MRT-Aufnahmen (MRT = Magnetresonanztomographie) und dergleichen. Zur Erzeugung von radiologischen Aufnahmen, die die Lungengefäße von Patienten zeigen, sei auf die Literatur zu diesem Thema verwiesen (siehe z.B. H.M. Kulke: Röntgendiagnostik von Thoraxerkrankungen, De Gruyter Verlag 2013, ISBN 978-3-11-031118-1).

Es ist denkbar, dass dem Patienten vor der Erzeugung einer oder mehrerer radiologischer Aufnahmen ein Kontrastmittel intravenös verabreicht worden ist, um den Kontrast zwischen den Blutgefäßen und dem umliegenden Gewebe zu erhöhen.

Kontrastmittel für radiologische Untersuchungen sind im Stand der Technik beschrieben; ein geeignetes Kontrastmittel für CT-Aufnahmen ist beispielsweise Iopromid, das beispielsweise unter dem Markennamen Ultravist® vertrieben wird. Ein geeignetes Kontrastmittel für MRT-Aufnahmen ist beispielsweise Gadobutrol, das beispielsweise unter dem Markennamen Gadovist® vertrieben wird.

Die radiologische Aufnahme kann beispielsweise aus einem Datenspeicher ausgelesen oder von einem Computertomographen/Magnetresonanztomographen übermittelt werden. Denkbar ist ferner, dass das erfin-

5 EP 3 968 271 A1 6

dungsgemäße Computersystem ein Bestandteil eines Computertomographen/Magnetresonanztomographen ist oder dass ein Computertomograph/Magnetresonanztomograph ein Bestandteil des erfindungsgemäßen Computersystems ist.

Üblicherweise liegt eine solche radiologische Aufnahme in Form einer digitalen dreidimensionalen Grafik vor, die aus einer Vielzahl von Bildelementen (Voxeln) aufgebaut ist, wobei jedes Voxel ein Volumenelement des Untersuchungsbereichs repräsentiert und jedem Voxel ein Tonwert zugeordnet ist, der z.B. die Röntgenabsorption des jeweiligen Volumenelements repräsentiert. Die Röntgenabsorption kann beispielsweise als CT-Wert angegeben werden. Die CT-Zahl oder der CT-Wert wird in Hounsfield-Einheiten (HE) auf der Hounsfield-Skala angegeben. Der CT-Wert lehnt sich an den linearen Schwächungskoeffizienten $\mu$ an, der beschreibt, wie monochromatische Röntgenstrahlung beim Durchdringen von Materie entlang des durchstrahlten Wegs abgeschwächt wird.

Mit dem Schwächungskoeffizienten des betrachteten Gewebes $\mu_T$ und von Wasser $\mu_W$ ist der CT-Wert definiert als

$$\text{CT} := \frac{\mu_T - \mu_W}{\mu_W} \cdot 1000 \text{ HU}$$

Die Skala ist theoretisch nach oben offen. In der Praxis hat sich der Bereich von -1024 HU bis 3071 HU durchgesetzt; diese 4096 Tonwerte (z.B. Graustufen) können mit einer zwölfstelligen Binärzahl dargestellt werden.

Falls eine radiologische Aufnahme in anderer Form vorliegt, kann sie in das beschriebene Format überführt werden. Vereinfachend wird in dieser Beschreibung davon ausgegangen, dass radiologische Aufnahmen in der beschriebenen Form vorliegen. Diese Annahme soll jedoch in keiner Weise limitierend verstanden werden. Dem Fachmann der Bildverarbeitung ist klar, wie er die Lehre dieser Beschreibung auf radiologische Aufnahmen, die in anderen Bildformaten vorliegen und/oder bei denen die Tonwerte anders kodiert sind, übertragen kann. Die vorliegende Erfindung soll daher sämtliche Formate umfassen, in denen radiologische Aufnahmen vorliegen können.

Üblicherweise zeigt eine solche radiologische Aufnahme den Thorax eines Patienten. In einem ersten Schritt wird eine solche Aufnahme segmentiert, das heißt in Segmente unterteilt, wobei eine Aufnahme erzeugt wird, die lediglich Strukturen zeigt, die auf die Lunge des Patienten zurückzuführen sind. Das bedeutet, dass Strukturen, die nicht auf die Lungen zurückzuführen sind, in der radiologischen Aufnahme identifiziert und entfernt werden, wie beispielsweise Knochen, das Herz und Blutgefäße, die keine Lungengefäße sind. Hierzu kann auf Verfahren, die im Stand der Technik beschrieben sind, zurückgegriffen werden (siehe z.B. G. De Nunzio et al.:

Automatic Lung Segmentation in CT Images with Accurate Handling of the Hilar Region, J. Digit. Imaging 2011, 24(1): 11-27; G. Armato et al.: Automated lung segmentation and computer aided diagnosis for thoracic CT scans, Int. Congr. Ser., 2003, 1256:977-982; S. Hu et al.: Automatic lung segmentation for accurate quantitation of volumetric X-ray CT images, IEEE Trans Med Imaging, 2001; 20(6): 490-8; M. Park et al.: Automatic extraction of lung boundaries by a knowledge-based method, Visualization 2000, Pan-Sydney Workshop on Visual Information Processing, Conferences in Research and Practice in Information Technology, M. Helmberger et al.: Pulmonary Vessel Detection and Analysis from CT Images, Master's Thesis, Graz University of Technology, 2013; WO2013/007063; EP1447772A, EP3488381A, WO01/54066).

Das Ergebnis ist eine radiologische Aufnahme der Lunge.

In einem weiteren Schritt, wenn nicht bereits im Rahmen der zuvor beschriebenen Segmentierung geschehen, werden die Pulmonalarterie und die Lungenvenen in der radiologischen Aufnahme der Lunge identifiziert und eliminiert, so dass lediglich die intrapulmonalen Verzweigungen (der Lungengefäßbaum) in der radiologischen Aufnahme verbleiben. Für die Identifizierung der Pulmonalarterie und der Lungenvenen kann ebenfalls auf Verfahren aus dem Stand der Technik zurückgegriffen werden (siehe z.B.: M. G. Linguraru et al.: Segmentation and quantification of pulmonary artery for noninvasive CT assessment of sickle cell secondary pulmonary hypertension, Med Phys., 2010, 37(4): 1522-1532; D. Jimenez-Carretero et al.: A graph-cut approach for pulmonary artery-vein segmentation in noncontrast CT images; Medical Image Analysis 52, 2019, 144-159; P. Nardelli et al.: Pulmonary Artery-Vein Classification in CT Images Using Deep Learning, IEEE Trans Med Imaging, 2018, 37(11): 2428-2440; WO2014/168350, EP1851720A, EP2279491A, EP1982291A, US20130083983).

Vorzugsweise werden die Pulmonalarterie und die Lungenvenen in der radiologischen Aufnahme durch ihre Zentrumslinien (engl.: *centerline*) ersetzt. Verfahren zur Identifizierung von Zentrumslinien sind im Stand der Technik beschrieben (siehe z.B.: A. Sironi et al.: Multiscale Centerline Detection, IEEE Transactions on Pattern Analysis and Machine Intelligence, 2015, 38. 1-1. 10.1109/TPAMI.2015.2462363).

Bei der Identifizierung der Pulmonalarterie kann auch die Teilungsstelle der linken Lungenarterie (*Arteria pulmonalis sinistra*) und der rechten Lungenarterie (*Arteria pulmonalis dextra*) ermittelt werden. Diese Teilungsstelle wird auch als *Bifurcatio trunci pulmonalis* bezeichnet und kann bei der Ausführung der vorliegenden Erfindung als Start-Bildelement verwendet werden (Details hierzu siehe weiter hinten im Text). Verfahren zum Identifizieren der Teilungsstelle (nachfolgend auch als Bifurkationspunkt bezeichnet) finden sich in der bereits oben zitierten Literatur oder in weiteren Publikationen (siehe z.B.: Y. Guo et al.: Automatic seed point identification and main artery segmentation for pulmonary vascular tree segmentation and tracking in computed tomographie pulmonary angiography (CTPA), Proc. SPIE 8315, Medical Imaging 2012: Computer-Aided Diagnosis, 83152P; J. A. Wala: Automated Pulmonary Artery Segmentation by Vessel Tracking in Low-Dose Computed Tomography Images, Thesis Presented to the Faculty of the Graduate School of Cornell University in Partial Fulfillment of the Requirements for the Degree of Master of Science, 2011).

Die so bearbeitete radiologische Aufnahme, die einen Lungengefäßbaum eines Patienten zeigt, wird in einem weiteren Schritt binarisiert (falls sie nicht bereits in binarisierter Form vorliegt). Bei der Binarisierung werden alle Bildelemente (Voxel, Pixel) der radiologischen Aufnahme, die Lungengefäße zeigen, auf einen ersten Tonwert gesetzt (z.B. den Tonwert 1 ("weiß")) und alle anderen Bildelemente auf einen zweiten Tonwert (z.B. den Tonwert 0 ("schwarz")). Dies geschieht üblicherweise mittels eines Tonwertschwellenwertverfahrens. Üblicherweise gibt es bei einem Tonwertschwellenwertverfahren einen oberen Schwellenwert und einen unteren Schwellenwert. Alle Bildelemente, die einen Tonwert aufweisen, der in dem Bereich zwischen dem oberen Schwellenwert und dem unteren Schwellenwert liegt, werden auf den Wert 1 (bzw. auf den höchsten vom vorliegenden Format unterstützen Tonwert) gesetzt, während die Tonwerte aller übrigen Bildelemente auf den Wert 0 gesetzt werden. Denkbar ist natürlich auch die umgekehrte Zuordnung. Denkbar ist auch, dass es nur einen einzigen Schwellenwert gibt, und dass alle Bildelemente, die einen Tonwert aufweisen, der unterhalb dieses Schwellenwerts liegt, auf den Wert 0 gesetzt werden und die Tonwerte der übrigen Bildelemente auf den Wert 1 (bzw. auf den höchsten vom vorliegenden Format unterstützen Tonwert) gesetzt werden.

Die Schwellenwerte, bzw. der Schwellenwert, falls nur einer verwendet wird, werden/wird so gewählt, dass durch das Tonwertschwellenwertverfahren ein Binärbild erzeugt wird, auf dem der Lungengefäßbaum dargestellt ist, umliegendes Gewebe hingegen herausgefiltert ist. Der Schwellenwert oder die Schwellenwerte können empirisch bestimmt werden. Da die Tonwerte in CT-Aufnahmen üblicherweise gemäß der Hounsfield-Skale kalibriert sind, lassen sich die empirisch ermittelten Schwellenwerte auf CT-Aufnahmen, die von einem anderen Computertomographen erzeugt worden sind, übertragen.

In einem weiteren Schritt wird das Binärbild regularisiert. Die Regularisierung dient dazu, dass Lücken in den Lungengefäßen, insbesondere den feinen Verästelungen, die in Folge der Binarisierung entstanden sein können, geschlossen werden. Regularisierungsverfahren sind im Stand der Technik beschrieben (siehe z.B. D.M. Titterington: Choosing the Regularization Parameter in Image Restoration, Lecture Notes-Monograph Series Vol. 20, Spatial Statistics and Imaging, 1991, pp. 392-402; N. Galatsanos, et al.: Methods for choosing the regularization parameter and estimating the noise variance in image restoration and their relation. Image Processing, IEEE Transactions, 1992, 1, 322 - 336. 10.1109/83.148606). Die Regularisierung entspricht einer Reskalierung der Binarisierung vom Bereich [0,1] zum Bereich [0.1, 1].

In einem weiteren Schritt wird ein Start-Bildelement festgelegt. Bei dem Start-Bildelement kann es sich beispielswiese im den Bifurkationspunkt handeln. Ebenso ist denkbar, dass ein anderer Punkt der Zentrumslinie der Pulmonalarterie als Start-Bildelement festgelegt wird. Ebenso ist denkbar, dass ein Hüllkörper (engl.: *bounding volume*) erzeugt wird, der den Lungengefäßbaum umschließt. Der Mittelpunkt (z.B. der geometrische Schwerpunkt) des Hüllkörpers kann als Start-Bildelement festgelegt werden. Üblicherweise handelt es sich bei dem Hüllkörper um den minimalen Hüllkörper, d.h. einen Körper definierter Geometrie mit dem geringsten Volumen. Der Hüllkörper kann beispielsweise ein Quader sein.

In einem weiteren Schritt wird für jedes Bildelement des regularisierten Binärbildes mit dem ersten Tonwert die geodätische Distanz zwischen dem jeweiligen Bildelement und dem Start-Bildelement ermittelt. Dabei führt der kürzeste Weg zwischen dem jeweiligen Bildelement und dem Start-Bildelement entlang der Bildelemente, die den ersten Tonwert aufweisen. Details zur Berechnung der geodätischen Distanz sind dem Stand der Technik zu entnehmen (siehe z.B. P. Soille: Geodätische Distanzen, Morphologische Bildverarbeitung, Springer, 1998, Seiten 191-212).

In einem weiteren Schritt werden lokale Maxima bei den geodätischen Distanzen ermittelt. Jedes lokale Maximum entspricht einem "Ende" eines Blutgefäßes.

Von den so ermittelten Enden der Blutgefäße werden Trajektorien zum Start-Bildelement erzeugt. Diese Trajektorien verlaufen entlang der kürzesten Wege (wie oben definiert) zwischen dem jeweiligen Ende eines Blutgefäßes und dem Start-Bildelement. Die Trajektorien entsprechen den Zentrumslinien der Blutgefäße.

Die Trajektorien repräsentieren also die Blutgefäße in Form von Zentrumslinien. Die Trajektorien geben den Verlauf der Blutgefäße, ihre Verzweigungen sowie ihre Abstände zueinander wieder. Sie sind damit ein dreidimensionales Modell des Lungengefäßbaums und können zur Diagnose von Veränderungen im Lungengefäßbaums eines Patienten, der an einer Lungenkrankheit erkrankt ist, gegenüber einem gesunden Patienten verwendet werden.

Zur Identifizierung von Veränderungen können beispielsweise die Verzweigungspunkte ermittelt werden. Ihre Zahl und/oder räumliche Verteilung gibt einen Hinweis auf Veränderungen.

Ein geeigneter Parameter zur Identifizierung von Veränderungen ist beispielsweise die Zahl der Verzweigungen, zum Beispiel in Form der Absolutzahl und/oder in Form der arithmetisch gemittelten Zahl der Verzweigungen vom Start-Bildelement zu den Enden der Blutgefäße.

In einer bevorzugten Ausführungsform wird die Absolutzahl der Verzweigungen wie folgt ermittelt:

- Festlegen eines initialen Zählwerts für alle Bildelemente aller Trajektorien (z.B. der Zählwert 0 ("Null")),
- erstes sequenzielles Zurückverfolgen aller Trajektorien, wobei beim ersten Zurückverfolgen einer jeden Trajektorie die Bildelemente der Trajektorie nacheinander vom Ende des Blutgefäßes in Richtung des Start-Bildelements passiert werden, wobei beim Zurückverfolgen der Zählwert eines jeden passierten Bildelements um einen Inkrementalwert (z.B. um den Wert 1 ("Eins")) erhöht wird,
- Ermitteln von Verzweigungen der Blutgefäße durch zweites sequenzielles Zurückverfolgen aller Trajektorien, wobei beim zweiten Zurückverfolgen einer jeden Trajektorie die Bildelemente der Trajektorie nacheinander vom Ende des Blutgefäßes in Richtung des Start-Bildelements passiert werden, wobei beim Zurückverfolgen diejenigen Bildelemente identifiziert werden, bei denen der Zählwert gegenüber dem vorangegangen Bildelement erhöht ist, wobei die identifizierten Bildelemente Verzweigungen der Blutgefäße repräsentieren,
- Ermitteln der Absolutzahl an Verzweigungen durch Zählen der identifizierten Bildelemente.

Die Zahl an Verzweigungen kann mit einem Referenzwert verglichen werden. Der Referenzwert kann beispielsweise eine durchschnittliche Zahl an Verzweigungen für einen gesunden Menschen gleichen Alters und/oder gleichen Geschlechts und/oder mit der gleichen (vergleichbaren) körperlichen Verfassungen sein. Der Referenzwert kann auch eine Zahl an Verzweigungen bei demselben Patienten zu einem früheren Zeitpunkt sein.

Bei einer definierten Abweichung der Zahl an Verzweigungen von einem oder mehreren Referenzwerten kann eine Mitteilung über die Abweichung ausgegeben werden. Liegt die Zahl an Verzweigungen beispielsweise signifikant unterhalb des Referenzwert (z.B. 10% oder 20% oder eine andere Zahl), kann eine Mitteilung ausgegeben werden, dass die Zahl der Verzweigungen signifikant unterhalb des Referenzwert liegt. Es können auch Maßnahmen ergriffen werden, um ein weiteres Absinken der Zahl an Verzweigungen zu verhindern.

Das erfindungsgemäße Verfahren ist sehr robust und erlaubt das automatisierte Erstellen von dreidimensionalen Modellen der intrapulmonalen Verzweigungen der Lungengefäße eines Patienten. Dazu können radiologische Aufnahmen des Thorax des Patienten automatisiert empfangen oder abgerufen und wie in dieser Beschreibung beschrieben automatisiert bearbeitet werden, um ein dreidimensionales Modell zu erzeugen und dieses zu analysieren.

Die Erfindung wird nachstehend anhand von Figuren näher erläutert, ohne die Erfindung auf die in den Figuren gezeigten Merkmale oder Merkmalskombinationen beschränken zu wollen.

Es zeigen:

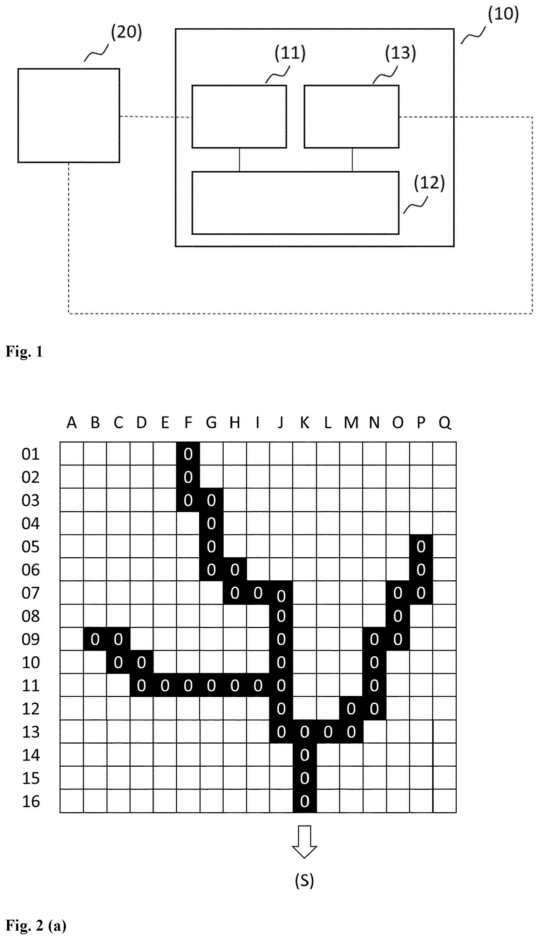

Fig. 1 zeigt schematisch eine Ausführungsform des erfindungsgemäßen Computersystems. Das Computersystem (10) umfasst eine Empfangseinheit (11), eine Steuer- und Recheneinheit (12) und eine Ausgabeeinheit (13).

Über die Empfangseinheit (11) empfängt das Computersystem (10) eine oder mehrere radiologische Aufnahmen. Der Begriff "empfangen" soll in dieser Beschreibung auch den Begriff "abrufen oder auslesen" umfassen. Die mindestens eine radiologische Aufnahme kann beispielsweise aus einem Datenspeicher (20) ausgelesen werden, der ein Bestandteil des erfindungsgemäßen Computersystems sein kann oder mit diesem über ein Netzwerk (dargestellt durch die gestrichelten Linien) verbunden sein kann.

Von der Empfangseinheit (11) werden radiologische Aufnahmen an die Steuer- und Recheneinheit (12) weitergeleitet. Die Steuer- und Recheneinheit (12) bearbeitet die radiologischen Aufnahmen wie in dieser Beschreibung beschrieben und erzeugt ein dreidimensionales Modell der intrapulmonalen Verzweigungen der Lungengefäße. Die Steuer- und Recheneinheit (12) kann das dreidimensionale Modell analysieren, um einen oder mehrere Parameter zu extrahieren, anhand deren eine Krankheit diagnostiziert und/oder die Schwere einer Krankheit ermittelt werden kann.

Das Modell und/oder der eine oder die mehreren Parameter können über die Ausgabeeinheit (13) ausgegeben, d.h. auf einem Monitor angezeigt, auf einem Drucker ausgegeben oder in einem Datenspeicher (z.B. dem Datenspeicher (20)) gespeichert werden.

Fig. 2 (a) bis (d) zeigen schematisch und beispielhaft die Analyse eines dreidimensionalen Modells der intrapulmonalen Verzweigungen der Lungengefäße eines Patienten.

Fig. 2 (a) bis (d) zeigen einen Teil des Lungengefäßbaums als Binärbild. Jedes Quadrat stellt ein Bildelement des Binärbilds dar. Die Bildelemente sind entweder farblos (weiß) oder gefärbt (schwarz). Ein gefärbtes Bildelement repräsentiert einen Teil der Zentrumslinie eines Lungengefäßes. Ein weißes Bildelement zeigt an, dass an der entsprechenden Stelle keine Zentrumslinie verläuft.

Zu Erläuterungszwecken sind Koordinaten eingezeichnet, d.h. jedes Bildelement ist durch seine Koordinaten eindeutig identifizierbar und adressierbar. Das Bildelement in der linken oberen Ecke trägt zum Beispiel die Koordinaten (A, 01); das Bildelement in der rechten unteren Ecke die Koordinaten (Q, 16).

Der in den Fig. 2 (a) bis (d) gezeigte Teil des Lungengefäßes weist drei Endpunkte auf. Die Koordinaten der drei Endpunkte sind (B, 09), (F, 01) und (P, 05). Von den Endpunkten aus laufen die Zentrumlinien der Lungengefäße in Form von Trajektorien in Richtung des Start-Bildelements. Das Start-Bildelement ist in den Fig. 2 (a) bis (d) selbst nicht dargestellt; der Pfeil deutet lediglich die Richtung zum Start-Bildelement (S) an.

In Fig. 2(a) sind alle Bildelemente, die einen Teil eines Lungengefäßes repräsentieren, mit einem Zählwert von 0 versehen. Dies ist der Startwert für die Ermittlung der Verzweigungen.

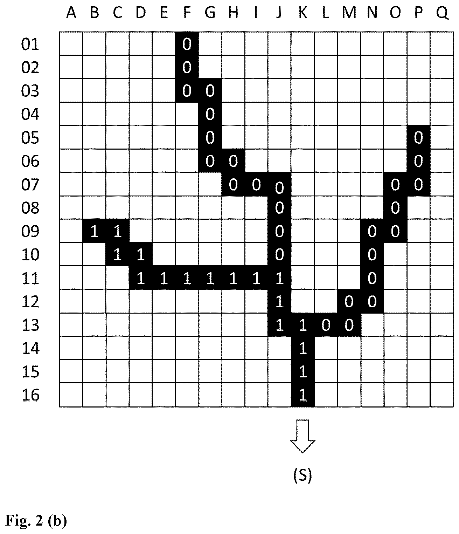

Es werden nun die Trajektorien nacheinander durchlaufen. Dabei ist es unerheblich, mit welcher Trajektorie begonnen wird. Es wird jeweils mit den Endpunkten begonnen und es werden alle Bildelemente einer Trajektorie nacheinander in Richtung des Start-Bildelements passiert. In Fig. 2 (b) wurde mit der Trajektorie begonnen, deren Endpunkt die Koordinaten (B, 09) aufweist. Bei allen Bildelementen, die passiert wurden, wurde der Zählwert um einen Inkrementalwert (hier dem Inkrementalwert 1) erhöht. Dementsprechend tragen die Bildelemente der Trajektorie mit dem Endpunkt (B, 09) nun den Zählwert 1 (0+1=1).

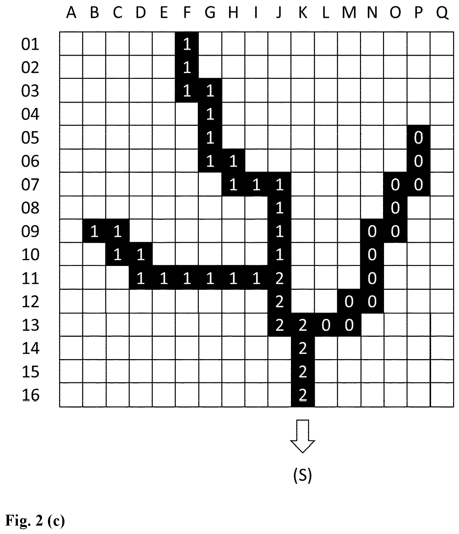

In Fig. 2 (c) wurde der Vorgang mit der Trajektorie, deren Endpunkt die Koordinaten (F, 01) aufweist, fortgesetzt. Auch diese Trajektorie wurde vom Endpunkt in Richtung des Start-Bildelements (S) durchlaufen und der Zählwert eines jeden dabei passierten Bildelements wurde um den Inkrementalwert 1 erhöht. Da die Bildelemente mit den Koordinaten (J, 11), (J, 12), (J, 13), (K, 13), (K, 14), (K, 15) und (K, 16) bereits den Zählwert 1 aufwiesen (siehe Fig. 2 (b)), tragen sie nun den Zählwert 2 (1+1=2).

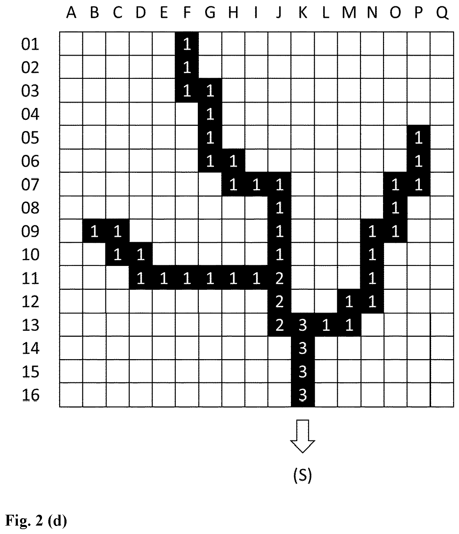

In Fig. 2 (d) wurde der Vorgang mit der Trajektorie, deren Endpunkt die Koordinaten (P, 05) aufweist, fortgesetzt. Auch diese Trajektorie wurde vom Endpunkt in Richtung des Start-Bildelements (S) durchlaufen und der Zählwert eines jeden dabei passierten Bildelements wurde um den Inkrementalwert 1 erhöht. Da die Bildelemente mit den Koordinaten (K, 13), (K, 14), (K, 15) und (K, 16) bereits den Zählwert 2 aufwiesen (siehe Fig. 2 (c)), tragen sie nun den Zählwert 3 (2+1=3).

Um die Verzweigungen zu identifizieren, müssen die Trajektorien ein zweites Mal durchlaufen werden; wieder beginnend mit den Endpunkten und in Richtung des Start-Bildelements (S). Dabei werden diejenigen Bildelemente identifiziert, deren Zählwert höher ist als der Zählwert des vorangegangenen Bildelements. Startet man beispielsweise wieder mit der Trajektorie, deren Endpunkt die Koordinaten (B, 09) trägt, dann weist das Bildelement mit den Koordinaten (J, 11) einen höheren Zählwert als das vorangegangene Bildelement (I, 11) auf. Bei dem Bildelement mit den Koordinaten (J, 11) handelt es sich folglich um eine Verzweigung. Folgt man dieser Trajektorie weiter, so weist auch das Bildelement mit den Koordinaten (K, 13) einen höheren Zählwert als das vorangegangene Bildelement mit den Koordinaten (J, 13) auf. Die Zahl der Bildelemente, die eine Verzweigung anzeigen, beträgt im vorliegenden Beispiel 2.

**Patentansprüche**

1. Computer-implementiertes Verfahren umfassend die Schritte:

   - Bereitstellen eines Binärbildes eines Lungengefäßbaums eines Patienten, wobei Bildelemente des Binärbildes, die einen Teil eines Lungengefäßes repräsentieren, einen ersten Tonwert aufweisen,
   - Erzeugen eines regularisierten Binärbildes durch Regularisierung des Binärbildes,
   - Festlegen eines Start-Bildelements,
   - für jedes Bildelement des regularisierten Binärbildes, das den ersten Tonwert aufweist: Berechnen einer geodätischen Distanz zwischen dem Bildelement und dem Start-Bildelement,
   - Ermitteln von Bildelementen, bei denen die geodätische Distanz ein lokales Maximum durchläuft, wobei die ermittelten Bildelemente mit einem lokalen Maximum Endpunkte der Lungengefäße repräsentieren,
   - Bilden von Trajektorien von den Endpunkten der Lungengefäße zum Start-Bildelement,
   - Ausgeben der Trajektorien auf einem Monitor und/oder einem Drucker und/oder Speichern der Trajektorien in einem Datenspeicher.

2. Verfahren gemäß Anspruch 1, ferner umfassend die Schritte

   - Empfangen einer radiologischen Aufnahme des Patienten, wobei die radiologische Aufnahme einen Thorax zeigt,
   - Segmentieren der radiologischen Aufnahme und dabei Entfernern von Strukturen, die nicht auf eine Lunge zurückzuführen sind,
   - Identifizieren einer Pulmonalarterie und von Lungenvenen in der segmentierten radiologischen Aufnahme und Entfernen von Strukturen in der segmentierten radiologischen Aufnahme, die auf die Pulmonalarterie oder die Lungenvenen zurückzuführen sind, wobei eine radiologische Aufnahme entsteht, die lediglich den Lungengefäßbaum zeigt.

3. Verfahren gemäß Anspruch 1 oder 2, ferner umfassend den Schritt:

   - Identifizieren einer Pulmonalarterie und von Lungenvenen und Ersetzen der Pulmonalarterie und der Lungenvenen durch ihre Zentrumslinien.

4. Verfahren gemäß Anspruch 1, 2 oder 3, ferner umfassend den Schritt:

   - Identifizieren einer Teilungsstelle einer linken Lungenarterie und einer rechten Lungenarterie und Setzen der Teilungsstelle als Start-Bildelement.

5. Verfahren gemäß Anspruch 1, 2 oder 3, ferner umfassend den Schritt:

- Erzeugen eines Hüllkörpers um den Lungengefäßbaum und Setzen des geometrischen Schwerpunkts des Hüllkörpers als Start-Bildelement.

6. Verfahren gemäß Anspruch 1 bis 5, ferner umfassend die Schritte:

- Festlegen eines initialen Zählwerts für alle Bildelemente aller Trajektorien,
- erstes sequenzielles Zurückverfolgen aller Trajektorien, wobei beim ersten Zurückverfolgen einer jeden Trajektorie die Bildelemente der Trajektorie nacheinander vom Ende des Blutgefäßes in Richtung des Start-Bildelements passiert werden, wobei beim Zurückverfolgen der Zählwert eines jeden passierten Bildelements um einen Inkrementalwert erhöht wird,
- Ermitteln von Verzweigungen der Blutgefäße durch zweites sequenzielles Zurückverfolgen aller Trajektorien, wobei beim zweiten Zurückverfolgen einer jeden Trajektorie die Bildelemente der Trajektorie nacheinander vom Ende des Blutgefäßes in Richtung des Start-Bildelements passiert werden, wobei beim Zurückverfolgen diejenigen Bildelemente identifiziert werden, bei denen der Zählwert gegenüber dem vorangegangen Bildelement erhöht ist, wobei die identifizierten Bildelemente Verzweigungen der Blutgefäße repräsentieren,
- Ermitteln der Absolutzahl an Verzweigungen durch Zählen der identifizierten Bildelemente.

7. Verfahren gemäß Anspruch 1 bis 6, ferner umfassend die Schritte:

- Vergleichen der Absolutzahl an Verzweigungen mit einem Referenzwert,
- im Fall einer definierten Abweichung der Absolutzahl von dem referenzwert: Ausgeben einer Mitteilung über die definierte Abweichung.

8. Computersystem umfassend

- eine Eingabeeinheit,
- eine Steuer- und Recheneinheit und
- eine Ausgabeeinheit

wobei die Steuer- und Recheneinheit konfiguriert ist, die Eingabeeinheit zu veranlassen, ein Binärbild eines Lungengefäßbaums eines Patienten zu empfangen, wobei Bildelemente des Binärbildes, die einen Teil eines Lungengefäßes repräsentieren, einen ersten Tonwert aufweisen,

wobei die Steuer- und Recheneinheit konfiguriert ist, ein regularisierte Binärbildes durch Regularisierung des Binärbildes zu erzeugen,

wobei die Steuer- und Recheneinheit konfiguriert ist, ein Start-Bildelement festzulegen,

wobei die Steuer- und Recheneinheit konfiguriert ist, für jedes Bildelement des regularisierten Binärbildes, das den ersten Tonwert aufweist, eine geodätische Distanz zwischen dem Bildelement und dem Start-Bildelement zu berechnen,

wobei die Steuer- und Recheneinheit konfiguriert ist, Bildelemente zu ermitteln, bei denen die geodätische Distanz ein lokales Maximum durchläuft, wobei die ermittelten Bildelemente Endpunkte der Lungengefäße repräsentieren,

wobei die Steuer- und Recheneinheit konfiguriert ist, Trajektorien von den Endpunkten der Lungengefäße zum Start-Bildelement zu bilden,

wobei die Steuer- und Recheneinheit konfiguriert ist, die Ausgabeeinheit zu veranlassen, die Trajektorien auf einem Monitor und/oder Drucker auszugeben und/oder in einem Datenspeicher zu speichern.

9. Computerprogrammprodukt umfassend ein Computerprogramm, das in einen Arbeitsspeicher eines Computersystems geladen werden kann und dort das Computersystem dazu veranlasst, folgende Schritte ausführen:

- Empfangen eines Binärbildes eines Lungengefäßbaums eines Patienten, wobei Bildelemente des Binärbildes, die einen Teil eines Lungengefäßes repräsentieren, einen ersten Tonwert aufweisen,
- Erzeugen eines regularisierten Binärbildes durch Regularisierung des Binärbildes,
- Festlegen eines Start-Bildelements,
- für jedes Bildelement des regularisierten Binärbildes, das den ersten Tonwert aufweist: Berechnen einer geodätischen Distanz zwischen dem Bildelement und dem Start-Bildelement,
- Ermitteln von Bildelementen, bei denen die geodätische Distanz ein lokales Maximum durchläuft, wobei die ermittelten Bildelemente Endpunkte der Lungengefäße repräsentieren,
- Bilden von Trajektorien von den Endpunkten der Lungengefäße zum Start-Bildelement,
- Ausgeben der Trajektorien auf einem Monitor und/oder einem Drucker und/oder Speichern der Trajektorien in einem Datenspeicher.

**Fig. 1**

(S)

**Fig. 2 (a)**

Fig. 2 (b)

Fig. 2 (c)

Fig. 2 (d)

**Europäisches Patentamt**
**European Patent Office**
**Office européen des brevets**

# EUROPÄISCHER RECHERCHENBERICHT

Nummer der Anmeldung

EP 20 19 5786

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DONGQING CHEN ET AL: "A tree-branch searching, multiresolution approach to skeletonization for virtual endoscopy", PROCEEDINGS OF SPIE, IEEE, US, Bd. 3979, 1. Januar 2000 (2000-01-01), Seiten 726-734, XP002318422, DOI: 10.1117/12.387735 ISBN: 978-1-62841-730-2 | 1-3,5,8,9 | INV. G06T7/00 A61B6/03 G06T7/136 |
| Y | * Zusammenfassung * | 4 | |
| A | * Seite 727 - Seite 731 * * Seite 733 * | 6,7 | |
| | ----- | | |
| Y,D | GUO YANHUI ET AL: "Automatic seed point identification and main artery segmentation for pulmonary vascular tree segmentation and tracking in computed tomographic pulmonary angiography (CTPA)", OPTOELECTRONIC SIGNAL PROCESSING FOR PHASED-ARRAY ANTENNAS IV, Bd. 8315, 22. Februar 2012 (2012-02-22), Seiten 83152P-83152P-6, XP055777134, 1000 20th St. Bellingham WA 98225-6705 USA ISSN: 0277-786X, DOI: 10.1117/12.912848 ISBN: 978-1-5106-4277-5 | 4 | RECHERCHIERTE SACHGEBIETE (IPC) G06T A61B |
| A | * Zusammenfassung * | 1-3,5-9 | |
| | ----- | | |

Der vorliegende Recherchenbericht wurde für alle Patentansprüche erstellt

| Recherchenort | Abschlußdatum der Recherche | Prüfer |
|---|---|---|
| München | 17. Februar 2021 | Katsoulas, Dimitrios |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013007063 A
- EP 1447772 A
- EP 3488381 A
- WO 0154066 A
- WO 2014168350 A

- EP 1851720 A
- EP 2279491 A
- EP 1982291 A
- US 20130083983 A

**In der Beschreibung aufgeführte Nicht-Patentliteratur**

- **H.M. KULKE.** Röntgendiagnostik von Thoraxerkrankungen. De Gruyter Verlag, 2013
- **DE NUNZIO et al.** Automatic Lung Segmentation in CT Images with Accurate Handling of the Hilar Region. *J. Digit. Imaging,* 2011, vol. 24 (1), 11-27
- **G. ARMATO et al.** Automated lung segmentation and computer aided diagnosis for thoracic CT scans. *Int. Congr. Ser.,* 2003, vol. 1256, 977-982
- **S. HU et al.** Automatic lung segmentation for accurate quantitation of volumetric X-ray CT images. *IEEE Trans Med Imaging,* 2001, vol. 20 (6), 490-8
- **M. PARK et al.** Automatic extraction of lung boundaries by a knowledge-based method. *Pan-Sydney Workshop on Visual Information Processing, Conferences in Research and Practice in Information Technology,* 2000
- **M. HELMBERGER et al.** Pulmonary Vessel Detection and Analysis from CT Images. *Master's Thesis, Graz University of Technology,* 2013
- **M. G. LINGURARU et al.** Segmentation and quantification of pulmonary artery for noninvasive CT assessment of sickle cell secondary pulmonary hypertension. *Med Phys.,* 2010, vol. 37 (4), 1522-1532
- **D. JIMENEZ-CARRETERO et al.** A graph-cut approach for pulmonary artery-vein segmentation in noncontrast CT images. *Medical Image Analysis,* 2019, vol. 52, 144-159

- **P. NARDELLI et al.** Pulmonary Artery-Vein Classification in CT Images Using Deep Learning. *IEEE Trans Med Imaging,* 2018, vol. 37 (11), 2428-2440
- **A. SIRONI et al.** Multiscale Centerline Detection. *IEEE Transactions on Pattern Analysis and Machine Intelligence,* 2015, vol. 38, 1-1
- **Y. GUO et al.** Automatic seed point identification and main artery segmentation for pulmonary vascular tree segmentation and tracking in computed tomographie pulmonary angiography (CTPA). *Proc. SPIE 8315, Medical Imaging 2012: Computer-Aided Diagnosis, 83152P,* 2012
- **J. A. WALA.** Automated Pulmonary Artery Segmentation by Vessel Tracking in Low-Dose Computed Tomography Images. *Thesis Presented to the Faculty of the Graduate School of Cornell University in Partial Fulfillment of the Requirements for the Degree of Master of Science,* 2011
- **D.M. TITTERINGTON.** Choosing the Regularization Parameter in Image Restoration. *Lecture Notes-Monograph Series,* 1991, vol. 20, 392-402
- **N. GALATSANOS et al.** Methods for choosing the regularization parameter and estimating the noise variance in image restoration and their relation. *Image Processing, IEEE Transactions,* 1992, vol. 1, 322-336
- Geodätische Distanzen. **P. SOILLE.** Morphologische Bildverarbeitung. Springer, 1998, 191-212